# EUROPEAN PATENT APPLICATION

(11) **EP 3 340 559 A1**
(43) Date of publication of application: **27.06.2018**
(21) Application number: 16205310.2
(22) Date of filing: 20.12.2016
(51) Int. Cl.: H04L 29/06, H04L 9/32

(54) **METHOD AND SYSTEM FOR FACILITATING SECURE COMMUNICATION BETWEEN TWO OR MORE DEVICES**

(71) Applicant: Private Giant, Orlando, Florida 32828 (US)
(72) Inventor: MURPHY, Shaun, Orlando, FL 32828 (US); MURPHY, Charles, Sarasota, FL 34232 (US); JOHNSON, Richard, Briarcliff Manor NY 10510 (US)
(74) Representative: D Young & Co LLP

(57) **Abstract**

Some embodiments provide an access-control device which controls access to encrypted messages. During operation, the access-control device can receive an access key for a corrupted message, and can receive a cover message digest associated with the corrupted message. The access-control device stores the access key in association with the cover message digest, and stores the cover message digest in a block chain. A respective block of the block chain includes at least one cover message digest, and a hash value of a previous block of the block chain.

## Description

### Field

The present invention generally relates to facilitating secure communication between two or more devices.

### Background

The relentless growth of the Internet has brought with it an ever increase demand for applications that facilitate to conduct various types of transactions online. Secure communications, among other things, are becoming progressively important to service providers. Over the past few decades, a number of systems for delivering secure message over unsecured channels have been developed. For example, there exist a number of public key infrastructure (PKI) systems that can issue digital certificates which facilitate two communicating entities to encrypt their messages.

Simply encrypting messages, however, might not be sufficient. For example, even when messages (such as emails) are encrypted between two communicating entities, the cipher text is often transmitted over an open, unsecured channel, and the sending and receiving parties' identities are also known to the public. Such information can be used by a malicious user to decrypt the cipher text (for example, by using brute-force dictionary-based cracking methods).

In many situations it is desirable to obscure secure communications between a sender and a recipient with a cover message. Traditionally, the cover message has been manually generated, typically by the sender or on the sender's behalf. The cover message might be based on a template or form, with a customized salutation or address specific to the recipient. The manual process is time-consuming and may require personal knowledge by the sender of context relevant to the recipient for the cover message to appear personal. Other automated cover-message generation methods are often impersonal and the messages generated are easy to spot as form or bulk cover messages.

### Summary

The invention is defined in the appended claims.

Some embodiments provide a personal computing device that can push data objects to one or more intended recipients. During operation, the computing device can obtain a data object being published by a user. The computing device can generate a partial message that includes a subset of the data object, and can send the partial message to an intended recipient of the data object, without first receiving a request for the data object from the intended recipient.

In some embodiments, the intended recipient can include a remote personal computing device, a remote personal storage device, and/or a storage server.

In some embodiments, the computing device can generate an access key that includes at least one section of the data object that are not in the partial message, and may send the access key to an access-control device that controls access to the data object, or to a storage server.

In some embodiments, while generating the partial message, the computing device can identify, from the data object, one or more data blocks that are to be made corrupt. The computing device may then extract segment of a respective data block to make the respective data block corrupt, and may combine the corrupt data blocks to form the partial message.

In some embodiments, the computing device can generate a cover message for the data object, and can send the cover message to the intended recipient to facilitate the intended recipient to obtain the data object based on the cover message.

In some variations on these embodiments, the computing device can generate a digest from the cover message, and can send the digest to an access-control device that controls access to the data object.

In some embodiments, the cover message can include an email message, a short message service (SMS) message, an instant messaging (IM) message, a message posted on a social media service, and/or an audio recording.

In some embodiments, the computing device can encrypt the data object using a predetermined encryption key to produce an encrypted message. Moreover, while generating the partial message, the computing device can obtain the at least one sections from the encrypted message, and can generate the partial message to include the at least one sections of the encrypted message.

Some embodiments provide an access-control device that can control access to encrypted messages. During operation, the access-control device can receive an access key for a data object being shared with at least one intended recipient, and a digest associated with the data object, and may store the access key and the digest in a look-up repository. When the device receives a request for the data object from a remote device, the device may obtain a second digest from the request. Moreover, the device may analyze the second digest to determine whether the second digest is valid. If the second digest is valid, the device may return the access key to the remote device.

In some embodiments, while storing the digest, the device may store the digest in a block chain. A respective block of the block chain can include at least one digest, and/or a hash value of a previous block of the block chain.

In some embodiments, the access-control device may be a member of a distributed hash table. When the device stores the digest in the block chain, the device may proceed to synchronize the block chain with at least one other member device of the distributed hash table.

In some embodiments, while returning the access key to the remote device, the device can perform a lookup operation, using the digest as input, to obtain an access key that includes the remainder of the data object. The access-control device can return the access key to the remote device.

In some embodiments, while validating the second digest, the device may perform a lookup operation in the block chain to determine whether the second digest exists in the block chain.

In some embodiments, the device can return a negative-acknowledgement (NACK) message if the second digest does not exist in the block chain.

In some embodiments, the device can return an acknowledgement (ACK) message if the second digest exists in the block chain.

In some embodiments, if the second digest exists in a block of the block chain, the device may validate the block. If the block is valid, the device may return an acknowledgement (ACK) message.

In some embodiments, if the block is not valid, the device may return a negative-acknowledgement (NACK) message.

In some embodiments, while validating the block, the device can determine whether a neighboring block in the block chain includes a hash value that matches the block's hash value, and/or can determine whether the block and a corresponding block of a remote access-control device have matching hash values.

The approach described herein can be used to provide an access-control device that controls access to encrypted data.

The approach described herein may be implemented as a method (performed by one or more computer systems), a system comprising one or more devices, which may be configured to perform such a method, and/or computer program code which when executed by a computer system will cause the computer system to implement such a method.

Although certain features are described herein as pertaining to particular embodiments, in general the skilled person will appreciate that the features described herein can be combined as appropriate across different embodiments unless there are specific reasons to prevent such combinations.

### Brief Description of the Figures

Various embodiments and implementations of the invention will now be described in detail, by way of example only, with reference to the following drawings.
FIG. 1 illustrates an exemplary network environment that facilitates protecting a user's communications over a computer network in accordance with some embodiments.
FIG. 2 presents a time-space diagram illustrating an exemplary process for automatically generating context-aware cover messages in accordance with some embodiments.
FIG. 3 presents a flowchart illustrating a method for automatically generating a context-aware cover message in accordance with some embodiments.
FIG. 4 presents a flowchart illustrating a method for uploading, to a topic server, a list of topics relevant to local context in accordance with some embodiments.
FIG. 5 presents a flowchart illustrating a method for creating a block chain entry for a secure message in accordance with some embodiments.
FIG. 6 presents a flowchart illustrating a method for receiving a cover message and obtaining a corresponding secure message in accordance with some embodiments.
FIG. 7 illustrates an exemplary computer system that facilitates automatic generation of context-aware cover messages for secure communication in accordance with some embodiments.

In the figures, like reference numerals refer to the same figure elements. The skilled person will appreciate that some embodiments may include all the features shown in all the above figures, while other embodiments may only include some of the features shown in a subset of the drawings (or any intermediate configuration may also be provided).

### Detailed Description

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications. Thus, the present approach is not limited to the particular embodiments shown, but applies to many other implementations, consistent with the principles and features disclosed herein.

### Overview

Embodiments of the present invention, and more generally the approached described herein, provide an access-control device (hardware box) that addresses the problem of protecting an entity's online communication and shared documents from being accessed by unauthorized entities. Using the access-control device, a user can communicate over a messaging framework (e.g., via email, a short message service (SMS), or an instant messaging service, etc.) or in-real time over a voice line (e.g., VoIP) using encrypted messages, and the access-control device can ensure that only authorized entities are able to decrypt the encrypted messages.

Moreover, the user can communicate over an existing third-party online social-media service, such as Twitter or Facebook, and the access-control device can ensure that only other authorized entities can view the protected content posted by the user. The access-control device can secure the content from eavesdroppers, such as the third-party online service itself, or any malicious entity that gains illegitimate access to the third party service's servers.

Hence, the access-control device can function as a user add-on to any existing online service, to protect the user's communication over that online service. For example, when communicating over email or an instant messaging service, a local user can generate a message that includes a file or document as an attachment. In some embodiments, the access-control device can generate a new message that includes a benign statement and/or benign attachment in plaintext (unencrypted) form that "masks" or "cloaks" the user's protected content, and can include the attachment in encrypted form (or can include a link to the encrypted content). This benign content is meant to distract an eavesdropper from the protected content by satisfying the eavesdropper's curiosity, and hiding the fact that the message includes an attachment. If the eavesdropper does not become aware of the protected content, the eavesdropper may not be motivated to crack the decryption of the protected content.

Hence, the access-control device allows the user to communicate with others over existing communication platforms that are typically implemented in a client-server architecture, while also protecting the user's communication. The user's client computer can generate and send a message to the server, and the server can send the message to a specific client that is authorized to access the content (e.g., via a push transaction, or in response to a pull request), or can publish the content for multiple clients to access. The access-control device can reside anywhere in the computer network between the user's client computer and the third-party server. In some embodiments, the access-control device can be a network switch, router, or firewall for a secure local area network (LAN). Alternatively, the user can configure his client computer or a router to use the access-control device as a proxy server for the client computer.

### Exemplary Network Environment

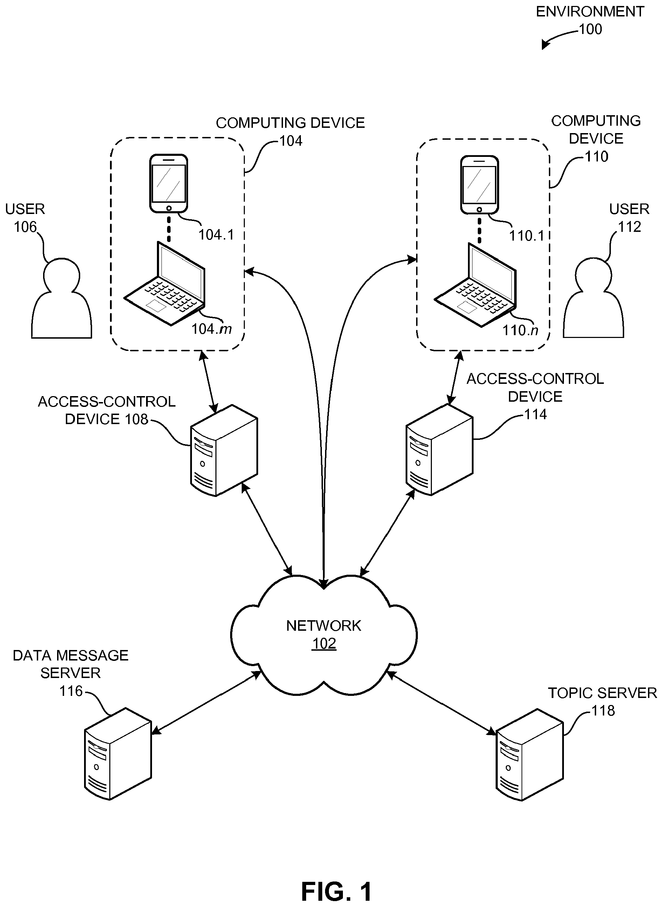

FIG. 1 illustrates an exemplary network environment 100 that facilitates protecting a user's communications over a computer network in accordance with some embodiments. Network environment 100 can include a computer network 102, which can include any wired or wireless network that interfaces various computing devices to each other, such as a computer network implemented via one or more technologies (e.g., Bluetooth, Wi-Fi, cellular, Ethernet, fiber-optic, etc.). In some embodiments, network 102 includes the Internet.

Network environment 100 can also include a computing device 104, which a user 106 uses to communicate a message or data to another user 112 or his computing device 110. During communication, one computer typically needs to send data to another computer, oftentimes using a large data file or data stream. For example, data for a conference call can include an audio stream and/or a video stream. Sometimes the communication can include additional data that may aid the communication, such as a presentation slide or deck, a webcast, a document, etc.

Computing device 104 can be a smartphone 104.1, a personal computer 104.*m*, or any device that needs to send or publish data over network 102. In some embodiments, user 106 can assign an access-control device 108 to computing device 104, which computing device 104 can use to protect the local user's data from being accessed by unauthorized entities. Similarly, user 112 can assign an access-control device 114 to computing device 110.

In some embodiments, access-control devices 108 and 114 can be members of a distributed hash table (or block chain) that can store digests for cover messages generated by any sending device. By storing these cover message digests, access-control devices 108 and 114 can confirm whether a benign message received by a receiving device is in fact a cover message. In one embodiment, a receiving device can send a benign message digest to access-control device 108 or access-control device 114, which in turn can compare the received digest with its stored digests to determine whether the benign message is a cover message or just a regular benign message.

Access-control device 108 can sit between computing device 104 and a messaging server 116 which computing device 104 uses to communicate with user 112. One advantage of this configuration is that messaging server 116 can speed up the transmission process between computing device 104 and computing device 110. Another advantage is that access-control device 108 can act as a repository for keys to the communication data, and computing device 104 only sends a portion of the encrypted communication message to data message server 116. Computing device 104 can leave a small percentage of the encrypted message on access-control device 108 itself. For example, when computing device 104 needs to send a message, computing device 104 may first encrypt the message locally, and extracts a portion of the encrypted message (e.g., 99%) to produce a corrupt version of the encrypted message. Computing device 104 may then transmit the corrupted encrypted message to message server 116, and transmits an access key that includes the extracted portion to access-control device 108. Hence, even though message server 116 receives the encrypted messages, message server 108 does not have all the data that is necessary to make use of these encrypted messages.

Topic server 118 can be responsible for collecting topics from any device in the network. In one embodiment, topic server 118 can distribute to the devices a generic topic list. Such a list might be based on, for example, the current popular topics in the news, sports, entertainment industry, etc. A respective device may download this generic list from topic server 118. In addition, the device may perform data mining on the user's local contextual data, such as the user's emails, calendar entries, chat history, text message history, web browsing history, etc., to determine whether a topic in the generic topic list is relevant to the user. In addition, the device can send a relevant topic list, which contains all the pertinent topics based on the user's contextual information, to topic server 118. In turn, topic server 118 can store each user's relevant topics. In one embodiment, a respective relevant topic list may be indexed by the corresponding user's identifier. Such an identifier can be a phone number, an email address, a social network media ID, or a globally unique identifier that topic server 118 generates for the user.

A remote computing device 110 associated with the intended recipient user 112 can obtain the encrypted message by first determining which pieces of data need to be received for the user by issuing a request to topic server 118. Topic server 118 can return a list of messages that computing device 110 may have in common with computing device 104. At this point, computing device 110 can issue a request to data message server 116 to obtain the corrupt encrypted message, and can issue a request to access-control device 108 to obtain an access key that transforms the corrupt encrypted message into the original encrypted message. In some embodiments, the key can include the data segments that computing device 104 extracted from the original encrypted message to produce the corrupt encrypted message.

One major advantage to this communication approach is that the sending device (e.g., computing device 104) can use any messaging server with a high network bandwidth to send or distribute a message or file to one or more recipients, without risking the data becoming compromised or leaked via these messaging servers. The access-control device can remain in the sender's possession (e.g., within an at-home local area network (LAN)), and may only need to send a small portion of the message or file (e.g., 1%) to the intended recipients via the user's own wide area network (WAN) connection.

Another major advantage to this approach is that it becomes impossible for a malicious entity to decrypt the sending device's messages, regardless of how much computing power the malicious entity uses to attempt to decrypt the sending device's data stored on the message server. While it is virtually impossible to decrypt a message that is encrypted using a large encryption key using modern computers, it may become possible to decrypt this encrypted content in the near future with future computing technologies. For example, advances in quantum computing threatens to undermine the security of modern encryption technologies by having the quantum computer attempt all possible (or a significant percentage thereof) encryption keys at once to decrypt a piece of encrypted content.

However, because the access-control device can retain key segments of the encrypted data, and the user can be in possession of the access-control device, the user in essence may retain complete control over his encrypted data. Therefore, because a malicious entity is not able to get a hold of the extracted segments of the encrypted data, the malicious entity may not have all the information necessary to even begin the decryption process. If the malicious entity were to attempt to decrypt the modified encrypted data with the valid decryption key, the malicious entity may only obtain a corrupted message that does not reveal any information of the original plaintext message.

In some embodiments, the sending device can push the message (or a large portion of the message) to each intended recipient ahead of time, without having to first receive a request for this message from the recipients. This allows the message to become available at the recipients' devices before they even become aware of the message, and allows them to quickly access large messages (e.g., multi-gigabyte video streams) without having to first request and download the message. When a recipient wishes to consume the message, the recipient's computer can issue a request for the remaining small portion of the message (e.g., a key containing 1% of the message), at which point the recipient's device downloads the remaining small portion and uses this portion to reconstruct the original message.

In some embodiments, the extracted portions of message data retained by the access-control device (and not sent to the message server) is determined based on a minimum amount of data and locations of the data that, if missing, would render it impossible to decypher any comprehensible data from the remaining portions of the data. For example, the system can determine an amount of data to extract based on a size of an encrypted file or message. Also, the system may determine which strategic locations of the file are to be used to extract the portions of the file based on the type of data (e.g., an audio or video stream, or a document), the type of encoding (e.g., size of data chunks for a data stream), and/or the encryption algorithm used.

For example, if the encrypted data is a data stream that is encoded and encrypted in segments, the minimum amount of data that needs to be removed from the encrypted data may correspond to the individual segments of the encrypted data stream. If the segments are 1 MB (megabytes) in size, the system may extract a 1 KB (kilobyte) portion from each 1 MB (megabyte) segment, to render the new segments corrupted and unreadable. If the data stream is encoded into variable-size segments, the location and portion of the encrypted data stream from which the system extracts data may vary according to the location and size of each segment in the encrypted data stream.

In some further embodiments, the system can vary the location of each encrypted data stream segment that is used to extract data, to prevent a malicious entity from performing a predictive attack. For example, the system can decide on which portion is to be extracted at runtime while generating the corrupted version of the encrypted data stream. Also, the system can store the segment number and byte offset of the extracted portion, along with the extracted portion, in the access-control device. Then, when an authorized receiving entity requests the extracted portion, the access-control device can return the extracted portion, along with a patch that the recipient can apply to the binary data stream (corrupt data) to recreate a segment of the encrypted data stream. The patch may include, for example, instructions that specify a stream timestamp or byte offset, or specify a stream segment number and a byte offset, that the receiving device can use to insert the extracted portion into the binary data stream to recreate the segment of the encrypted data stream.

Note that, although the exemplary network environment illustrated in FIG. 1 includes a message server 116 and a topic server 118 as separate systems (which might or might not be located in different locations), these servers can also reside in a common hardware system or datacenter. In some embodiments, the functions of these two servers can be carried out by a common physical server.

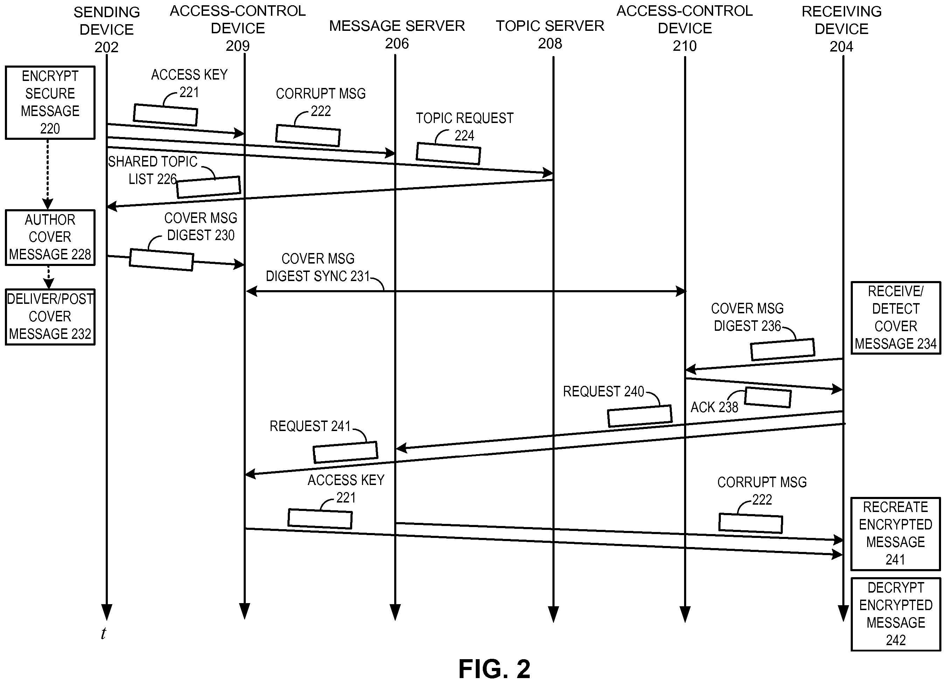

FIG. 2 presents a time-space diagram illustrating an exemplary process for automatically generating context-aware cover messages in accordance with some embodiments. In this example, assume that a sending device 202 needs to send a secure message to a receiving device 204, and that a public/private key pair has already been distributed between sending device 202 and receiving device 204. During operation, sending device may 202 first encrypt the secure message with receiving device 204's public key (operation 220), and may generate a partial message that includes a corrupted version of the secure message by extracting one or more segments of the secure message. Sending device 202 may then generate an access key that includes the one or more extracted segments of the secure message.

Sending device 202 then sends corrupted message 222 (e.g., a partial message) to a message server 206, and sends the access key to access-control device 209. At approximately the same time, sending device 202 may send a topic request 224 to a topic server 208. The purpose of sending topic request 224 is to obtain a list of common topics shared between sending device 202 and receiving device 204. In one embodiment, topic request 224 can include an identifier for sending device 202 and an identifier for receiving device 204.

In response topic request 224, topic server 208 can send a shared topic list 226 to sending device 202. Note that shared topic list 226 can include any topic that is relevant to the respective users of sending device 202 and receiving device 204. For example, shared topic list 226 might include latest news of a local sports team, a recently released film, popular news topics, popular music, etc.

After receiving shared topic list 226, sending device 202 can author a cover message (operation 228). To author the cover message, sending device 202 can select one topic from topic list 226, and can automatically generate a piece of content based on the selected topic. Various methods can be used to generate the content, which can be a combination of text, pictures, and other medium form. In one embodiment, sending device can issue a search to the Internet with the selected topic as a search key word, and crawl the search results to generate the content.

Subsequently, sending device 202 can generate a cover message digest 230, for example, by computing a hash value of the cover message. Sending device 202 may then send cover message digest 230 to access-control device 209, which in turn may store cover message digest 230. Recall that access-control device 209 can implement a distributed hash table with one or more other access-control devices. In some embodiments, access-control device 209 can synchronize the local hash values (or block chain) with one or more other access-control devices, such as an access-control device 210 associated with receiving device 204.

Furthermore, sending device 202 can deliver or post the cover message (operation 232). Note that the cover message can be delivered to receiving device 204 in various ways. For example, the cover message can be sent as an SMS message, an email, a blog post, a social network media entry (such as a Twitter or Facebook entry). The user of sending device 202 can set a preference for the delivery of the cover message, or can select a delivery medium at the time the user generates and sends the message.

In some embodiments, access-control device 209 can author cover message 228 and deliver/post cover message 232 on behalf of sending device 202.

In response, receiving device 204 can receive or detect the cover message (operation 234). In some embodiments, receiving device 204 may be pre-configured to monitor certain communication channel(s), such as SMS messages, incoming emails, a certain blog, or a certain social network media channel. Once the cover message is received, receiving device 204 may compute a hash for the cover message to produce cover message digest 236. Next, receiving device 204 can send cover message digest 236 to cover message server 210, which can search its storage to determine whether cover message digest 236 matches with any previously stored digest. Cover message server 210 may then send an acknowledgement 238 back to receiving device 204 to confirm whether cover message digest 236 indicates that receiving device 204 has in fact received a real cover message, instead of a regular benign message.

After confirming that the cover message indicates the availability of a secure message for receiving device 204, receiving device 204 may subsequently send a request 240 to message server 206 to request corrupted message 222, and may send a request 241 to access-control device 209 to request access key 221. Note that receiving device 204 may be required to authenticate itself with necessary security credentials (such as a password or a digital certificate), either prior to or along with request 240 and request 241. In addition, request 240 and request 241 can include receiving device 204's identifier, which message server 206 may use to locate corrupted message 222, and which access-control device 209 may use to local access key 221. In response to receiving a valid request 240, secure message server 206 may transmit encrypted message 222 to receiving device 204. Also, in response to receiving a valid request 241, access-control device 209 may transmit access key 221 to receiving device 204. Receiving device 204 may then use the corrupt encrypted message 222 and access key 221 to recreate encrypted message (operation 241), and may then proceed to decrypt encrypted message 241 using its private key (operation 242).

### Sending Device

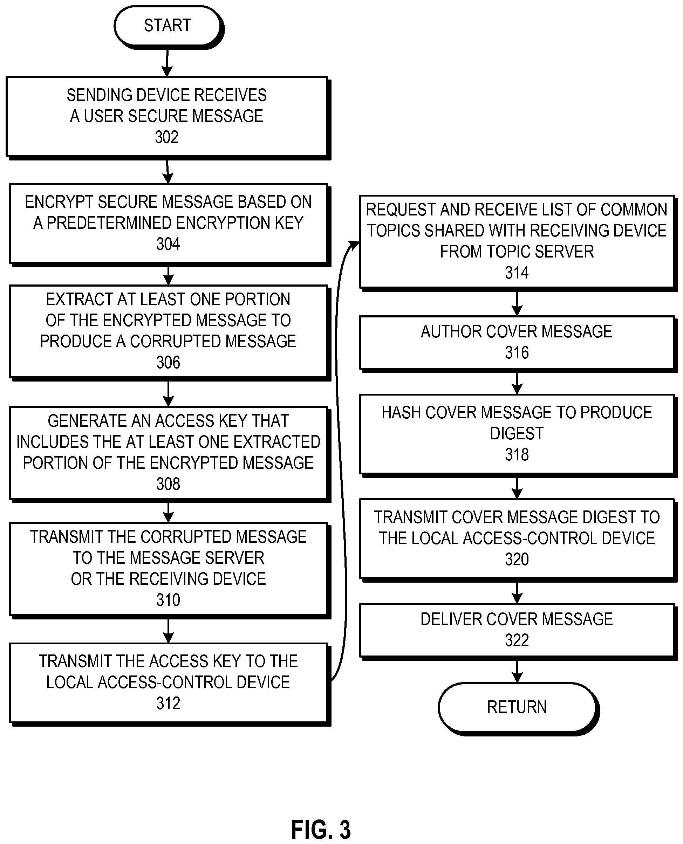

FIG. 3 presents a flowchart illustrating a method for automatically generating a context-aware cover message in accordance with some embodiments. During operation, the sending device can receive a secure message from the user (operation 302), and can encrypt the secure message based on a previously distributed key pair (e.g., the receiving device's public key) (operation 304).

Next, the sending device can extract at least one portion of the encrypted message to produce a corrupted message (operation 306), and can generate an access key that includes the at least one extracted portion of the encrypted message (operation 308). The sending device may then transmit the corrupted message to the message serve or to the receiving device (operation 310), and may transmit the access key to the local access-control device (operation 312).

Subsequently, the sending device can request and receive a list of common topics shared with the receiving device from the topic server (operation 314). The sending device can then author a cover message based on one or more topics shared with the receiving device (operation 316). The sending device can also hash the cover message to produce a digest (operation 318), and can transmit the cover message digest to the cover message server (operation 320). The system can use various hashing methods, such as SHA-512. Next, the sending device may deliver the cover message (operation 322). In some embodiments, the cover message can be delivered by a third party, instead of by the sending device.

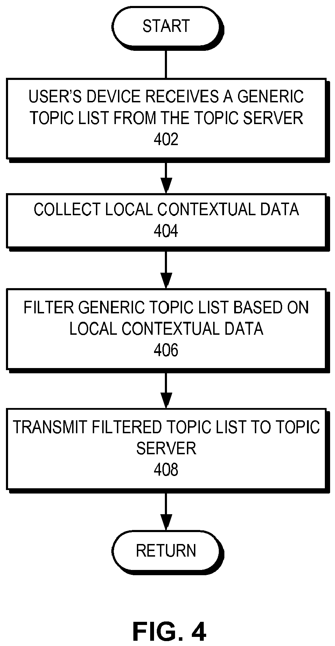

FIG. 4 presents a flowchart illustrating a method for uploading, to a topic server, a list of topics relevant to local context in accordance with some embodiments. In general, a sending or receiving device may first receive a generic topic list from the topic server (operation 402). Note that the topic server can regularly search the Internet to compile the generic topic list. The device may then collect local contextual data (operation 404), such as by scanning the local user's emails, SMS messages, chat history, blog entries, social media content history, web browsing history, etc. Next, the device can filter the generic topic list based on the local contextual data (operation 406). The device may subsequently transmit the filtered topic list back to the topic server (operation 408).

### Access-control device

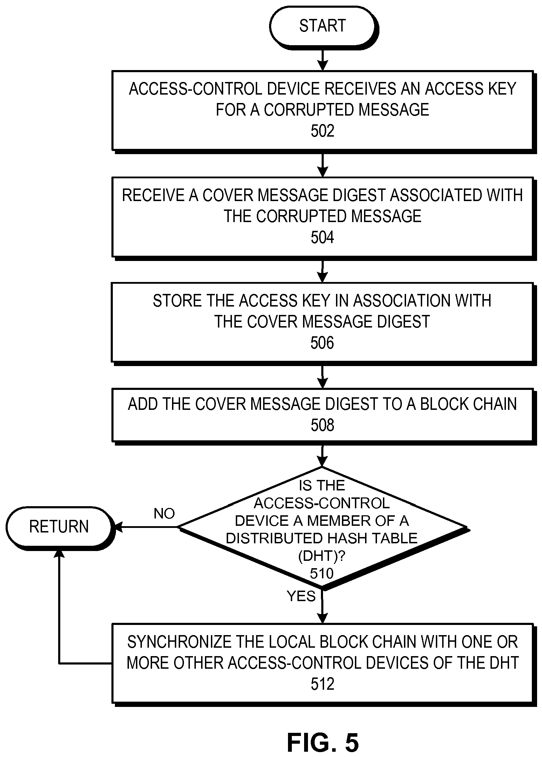

FIG. 5 presents a flowchart illustrating a method for creating a block chain entry for a secure message in accordance with some embodiments. During operation, an access-control device can receive an access key for a corrupted message from a sending device (operation 502), and receives a cover message digest associated with the corrupted message (operation 504). The access-control device then stores the access key in association with the cover message digest (operation 506). For example, the access-control device can store the access key in a lookup table or relational database, using the cover message digest as the index for the access key.

In some embodiments, the access-control device uses a block chain to store the cover message digests. Also, the access-control device can be a member of a distributed hash table that is implemented across a plurality of access-control devices. Hence, the access-control device can add the cover message digest to the local block chain (operation 508). The access-control device also determines whether the local access-control device is a member of a distributed hash table (operation 510). If so, the local access-control device can synchronize the local block chain with one or more other boxes of the distributed hash table (operation 512).

### Receiving Device

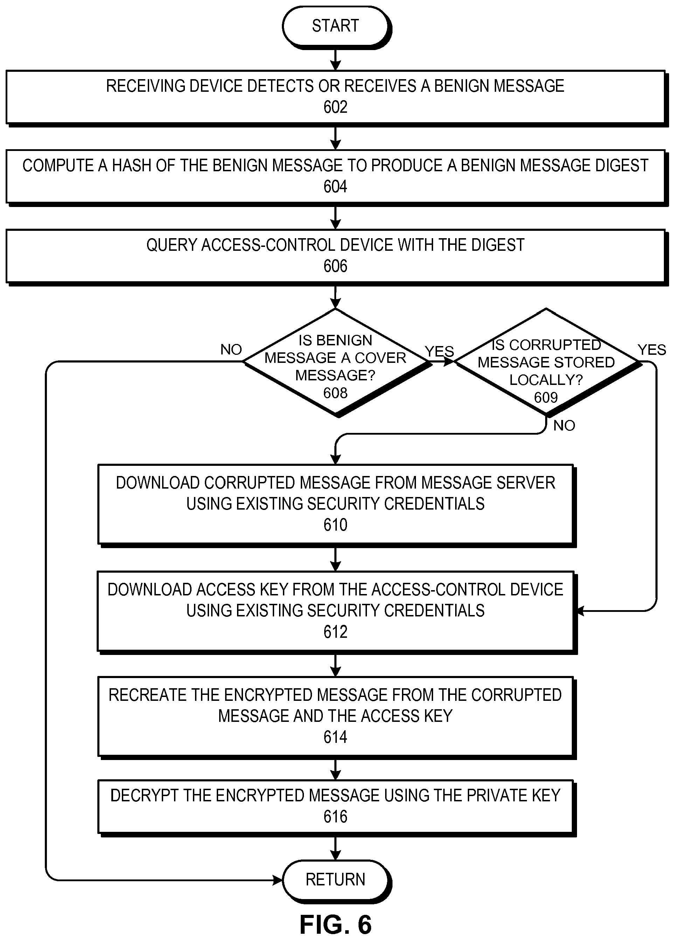

FIG. 6 presents a flowchart illustrating a method for receiving a cover message and obtaining a corresponding secure message in accordance with some embodiments. During operation, a receiving device can detect or receive a benign message by monitoring one or more communication channels (operation 602). The receiving device computes a hash of the benign message to produce a benign message digest (operation 604). Note that some hashing methods (such as the SHA-512 hashing method) can be computationally expensive on a general-purpose processor.

In some embodiments, a dedicated, special-purpose piece of hardware (such as an application-specific integrated circuit (ASIC) or field programmable logic array (FPGA)) is used to perform the hashing function. The receiving device then queries the access-control device with the computed digest (operation 606). Based on the response from the cover message server, the receiving device determines whether the benign message is a cover message (operation 608). If the benign message is not a cover message, the receiving device does not perform any special operation.

If the benign message is a cover message, the receiving device determines whether the corrupted message is already stored locally (operation 609). If the corrupted message is not stored locally, the receiving device may download the corrupted message from the message server using its existing security credentials (operation 610), and downloads the access key from the sender's access-control device using the existing security credentials (operation 612). In some embodiments, the sending device may push the corrupted message directly to the receiving device. The receiving device does not need to download the corrupted message at the time the user wishes to view the message. Hence, if the corrupted message is already stored locally, the receiving device can proceed to operation 612 to download the access key without first having to request or download the corrupted message.

Recall that the access key can include one or more data portions that were extracted from an encrypted message to produce the corrupted message. The receiving device can create the encrypted message from the corrupted message and the access key (operation 614), and can decrypt the encrypted message using its private key (operation 616).

In some embodiments, the receiving device can also be configured to use an access-control device to receive and cache data being transmitted by the sending device. For example, the access-control device associated with the receiving device can obtain the corrupted encrypted data, can request and receive the extracted portions of the encrypted data, and can re-insert the extracted portions into the corrupted encrypted data to recreate the original encrypted data on behalf of the receiving device.

Moreover, the receiving device's access-control device can obtain and cache (or store) the recreated encrypted data ahead of time, so that the encrypted data is available for the receiving device when the receiving device requests the encrypted data. For example, the message server, the sending device, or the sending device's access-control device can push the corrupted message to the receiving device's access-control device. The receiving device's access-control device can recreate the encrypted data upon receiving the push message.

As another example, the receiving device's access-control device can pre-fetch data from a third-party online service, such as an email server, an on-line social media service (e.g., Twitter, Facebook, etc.). In some embodiments, one or more message servers implement the third-party online service. In some other embodiments, the message server can host encrypted data that is being transferred along with (and "masked" by) a message published via the third-party online service. When the receiving device's access-control device receives a corrupted message from the message server, the access-control device can determine a network address for another access-control device associated with the corrupted message (e.g., the sending device's access-control device), and can issue a request to this network address to obtain the access key or the extracted portion of the corrupted message.

Furthermore, the receiving device can also be configured to use an access-control device to protect data published or transmitted by the receiving device. For example, a local user and a remote user can implement secure two-way communication by each configuring an access-control device to secure data on behalf of the user. An access-control device that is managed by the local user can store extracted portions of the local user's data (e.g., 1% of the data), and can provide these extracted portions to the remote user's device upon request. Similarly, an access-control device that is managed by the remote user can store extracted portions of the remote user's data, and provides these extracted portions to the local user's device upon request. This provides two advantages to the two-way communication: communication becomes secure and only accessible to the local and remote users; and the computational overhead of securing their communication is offloaded to the two access-control devices that may have more computational and energy resources than the personal computing devices used by the local and remote users.

### Distributed Framework

In some embodiments, a plurality of access-control devices can cooperate to form a distributed framework that can store data in encrypted form for a user, and can validate the authenticity of each other's stored data. Moreover, the access-control devices of the distributed framework can store cove message digests for messages that have been made accessible to a receiving device.

In some embodiments, a cover message digest is a "hash code" that pairs with a piece of encrypted message. For example, the distributed framework can group one or more cover message digests into a "block" that is stored across the access-control devices in the distributed framework, such that each block includes a set of validated cover message digests. Moreover, the blocks stored in the distributed framework can be block chained, so that each block in the block chain includes a digest (e.g., a hash value) for the next block in the block chain. Storing the cover message digests as a distributed block chain can allow tampered blocks to be detected. For example, if a malicious entity were to tamper with a block in one access-control device, the access-control device can determine that the block has been tampered with by comparing the block's hash value with the hash value stored in the previous block of the block chain. The access-control device can perform a remedial action, for example, by requesting a validated copy of the block from other access-control devices of the distributed framework, and replacing the tampered-with block with the validated copy.

Moreover, other access-control devices of the distributed framework can detect the tampered-with block by comparing its hash value with that of the other access-control devices in the framework. The distributed framework can also perform a remedial action, such as by removing the tampered-with access-control device from the distributed framework.

In some embodiments, the distributed framework can include access-control devices owned or managed by a plurality of individual users or organizations. The security of the distributed framework can increase as more access-control devices and more trustworthy entities join the distributed framework.

In some other embodiments, a single organization or entity can create a proprietary distributed framework by configuring a plurality of personal access-control devices to implement a distributed hash table or block chain amongst themselves, without allowing an access-control device that is not owned by the entity to join the distributed framework. The access-control devices that are within the distributed framework may reside within a secure local area network (LAN) or virtual private network (VPN) that is secured and managed by the organization or entity. For example, the organization may deploy multiple access-control devices at each office building that is owned or managed by the organization, and can configure the proprietary distributed framework to secure all communication performed by any member or employee of the organization.

This ensures that all communication performed by the organization's members can be validated during the communication event. For example, the distributed framework can validate all real-time communication (e.g., a voice or video conference call) by ensuring that only authorized receiving devices can listen in on the communication. As another example, the distributed framework can track email messages sent to other entities, and can validate a request to read an email message body from a receiving device that received a corrupted version of the email message. Moreover, the organization can modify a list of recipients for an already-sent message, for example, by rejecting a request for the extracted portion of a message when a recipient has been removed from the list of allowed recipients, or when the message is being read after a predetermined time window (e.g., the message content has become stale).

The access-control devices can communicate the cover message digest as a distributed hash, in a distributed fashion without requiring a central server to serve as a central authority for validated cover message digests. For example, the sending device can make the cover message digest available for the receiving device via any existing communication or social-media service, such as in a message on a social-media posting or in an email message. When a receiving device obtains the cover message digest, the receiving device can verify the authenticity of the cover message digest by sending a validation request to any trusted access-control device of the distributed framework. If the cover message digest is valid, the access-control device may return an acknowledgement (ACK) message, which acknowledges that the cover message digest is valid. Otherwise, the access-control device may return a negative acknowledgement (NACK) message which indicates that the cover message digest is not valid, or may perform another predetermined remedial action.

In some embodiments, if the user behind the receiving device has an access-control device that is a member of the distributed framework, this access-control device can include a copy of the block chain or distributed hash table of all valid cover message digests. Hence, the receiving device can send the validation request to the local access-control device to determine whether the cover message digest is valid.

If the receiving device receives an ACK message, the receiving device can proceed to obtain the corrupted encrypted message from a remote server or device (e.g., a secure message server, or any access-control device of the distributed framework), to obtain the extracted segments of the encrypted message, to recreate the original encrypted message, and to decrypt the encrypted message. However, if the receiving device receives a NACK message, the receiving device can alert the user that the message does not appear to be authentic or trustworthy. The user can ask the sender to submit a new valid cover message digest, or may choose to proceed to download and decrypt the encrypted message at the user's own risk.

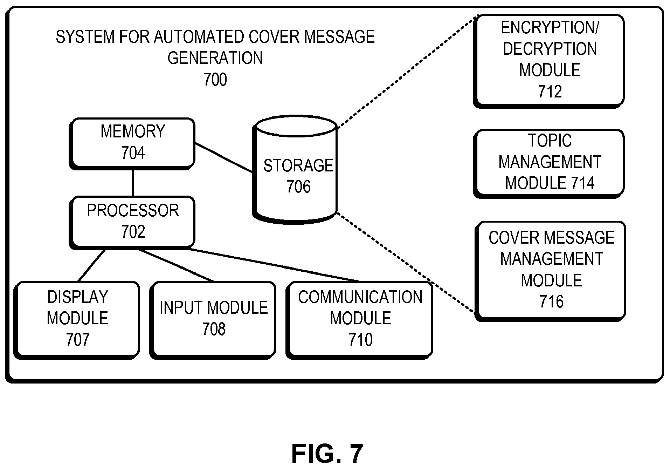

FIG. 7 illustrates an exemplary computer system that facilitates automatic generation of context-aware cover messages for secure communication in accordance with some embodiments. In this example, a system 700 for automated cover message generation can include a memory device 704, a processor 702, a storage device 706, a display module 707, an input module 708, and a communication module 710.

Storage device 706 can store instructions which when loaded into memory 704 and executed by processor 702 cause processor 702 to perform the aforementioned operations (for a sending device, a receiving device, or both). More specifically, the instructions stored in storage device 706 can include an encryption/decryption module 712, a topic management module 714, and a cover message management module 716. Encryption/decryption module 712 is responsible for encrypting and decrypting a secure message. Topic management module 714 is responsible for uploading locally filtered topic list to the topic server, and receiving a shared topic list with respect to a particular receiving device from the topic server. Cover message management module 716 is responsible for generating a context-aware cover message and computing a digest for a generated or received cover message.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present approach to the forms disclosed. Accordingly, many modifications and variations will be apparent to practitioners skilled in the art. The scope of the present invention is defined by the appended claims.

Various aspects of the invention are defined in the following numbered clauses:
1. A method comprising:
   obtaining, by a computing device, a data object being published by a user;
   generating a partial message that includes a subset of the data object; and
   sending the partial message to an intended recipient of the data object, without first receiving a request for the data object from the intended recipient.
2. The method of clause 1, wherein the intended recipient includes one or more of:
   a remote personal computing device;
   a remote personal storage device; and
   a storage server.
3. The method of clause 1 or 2, further comprising:
   generating an access key that includes at least one section of the data object that are not in the partial message; and
   sending the access key to an access-control device that controls access to the data object, or to a storage server.
4. The method of any preceding clause, wherein generating the partial message involves:
   identifying, from the data object, one or more data blocks that are to be made corrupt;
   extracting a segment of a respective data block to make the respective data block corrupt; and
   combining the corrupt data blocks to form the partial message.
5. The method of any preceding clause, further comprising:
   generating a cover message for the data object; and
   sending the cover message to the intended recipient, which facilitates the intended recipient to obtain the data object based on the cover message.
6. The method of clause 5, further comprising:
   generating a digest from the cover message; and
   sending the digest to an access-control device that controls access to the data object.
7. The method of clause 6, wherein the cover message includes one or more of:
   an email message;
   a short message service (SMS) message;
   an instant messaging (IM) message;
   a message posted on a social media service; and
   an audio recording.
8. The method of any preceding clause, further comprising encrypting the data object using a predetermined encryption key to produce an encrypted message;
   wherein generating the partial message involves:
   obtaining the at least one sections from the encrypted message; and
   generating the partial message to include the at least one sections of the encrypted message.
9. A non-transitory computer-readable storage medium storing instructions that when executed by a computer cause the computer to perform a method, the method comprising:
   obtaining a data object being published by a user;
   generating a partial message that includes a subset of the data object; and
   sending the partial message to an intended recipient of the data object, without first receiving a request for the data object from the intended recipient.
10. The storage medium of clause 9, wherein the intended recipient includes one or more of:
   a remote personal computing device;
   a remote personal storage device; and
   a storage server.
11. The storage medium of clause 9 or 10, further comprising:
   generating an access key that includes at least one section of the data object that are not in the partial message; and
   sending the access key to an access-control device that controls access to the data object, or to a storage server.
12. The storage medium of any of clauses 9 to 11, wherein generating the partial message involves:
   identifying, from the data object, one or more data blocks that are to be made corrupt;
   extracting a segment of a respective data block to make the respective data block corrupt; and
   combining the corrupt data blocks to form the partial message.
13. The storage medium of any of clauses 9 to 12, further comprising:
   generating a cover message for the data object; and
   sending the cover message to the intended recipient, which facilitates the intended recipient to obtain the data object based on the cover message.
14. The storage medium of clause 13, further comprising:
   generating a digest from the cover message; and
   sending the digest to an access-control device that controls access to the data object.
15. The storage medium of clause 14, wherein the cover message includes one or more of:
   an email message;
   a short message service (SMS) message;
   an instant messaging (IM) message;
   a message posted on a social media service; and
   an audio recording.
16. The storage medium of any of clauses 9 to 15, further comprising encrypting the data object using a predetermined encryption key to produce an encrypted message;
   wherein generating the partial message involves:
   obtaining the at least one sections from the encrypted message; and
   generating the partial message to include the at least one sections of the encrypted message.
17. A method comprising:
   receiving, by an access-control device, an access key for a data object being shared with at least one intended recipient, and a digest associated with the data object;
   storing the access key and the digest in a look-up repository;
   in response to receiving a request for the data object from a remote device, obtaining a second digest from the request; and
   responsive to validating the second digest, returning the access key to the remote device.
18. The method of clause 17, wherein storing the digest further involves storing the digest in a block chain, wherein a respective block of the block chain includes at least one digest, and a hash value of a previous block of the block chain.
19. The method of clause 17 or 18, wherein the access-control device is a member of a distributed hash table, and wherein the method further comprises:
   responsive to storing the digest in the block chain, synchronizing the block chain with at least one other member device of the distributed hash table.
20. The method of any of clauses 17 to 19, wherein returning the access key to the remote device involves:
   performing a lookup operation, using the digest as input, to obtain an access key that includes the remainder of the data object; and
   returning the access key to the remote device.
21. The method of any of clauses 17 to 20, wherein validating the second digest involves performing a lookup operation in the block chain to determine whether the second digest exists in the block chain.
22. The method of clause 21, further comprising:
   responsive to determining that the second digest does not exist in the block chain, returning a negative-acknowledgement (NACK) message.
23. The method of clause 21, further comprising:
   responsive to determining that the second digest exists in the block chain, returning an acknowledgement (ACK) message.
24. The method of clause 21, further comprising, responsive to determining that the second digest exists in a block of the block chain:
   validating the block; and
   responsive to determining that the block is valid, returning an acknowledgement (ACK) message.
25. The method of clause 24, further comprising:
   responsive to determining that the block is not valid, returning a negative-acknowledgement (NACK) message.
26. The method of clause 24 or 25, wherein validating the block involves one or more of:
   determining whether a neighboring block in the block chain includes a hash value that matches the block's hash value; and
   determining whether the block and a corresponding block of a remote access-control device have matching hash values.
27. An access-control device, comprising:
   a communication module operable to receive an access key for a data object being shared with at least one intended recipient, and a digest associated with the data object;
   a storage device operable to store the access key and the digest in a look-up repository;
   a digest-lookup module operable to obtain a second digest from a request received from a remote device for the data object;
   a digest-validation module operable to validate the second digest; and
   an authorization module operable to return the access key to the remote device in response to the second digest being valid.
28. The access-control device of clause 27, wherein the storage device is further operable to store the digest in a block chain, wherein a respective block of the block chain includes at least one digest, and a hash value of a previous block of the block chain.
29. The access-control device of clause 27 or 28, wherein the access-control device is a member of a distributed hash table, and
   wherein the storage device is further operable to, in response to storing the digest in the block chain, synchronize the block chain with at least one other member device of the distributed hash table.
30. The access-control device of any of clauses 27 to 29, wherein authorization module is further operable to performing a lookup operation, using the digest as input, to obtain an access key that includes the remainder of the data object.
31. The access-control device of any of clauses 27 to 30, wherein the digest-validation module is further operable to perform a lookup operation in the block chain to determine whether the second digest exists in the block chain.
32. The access-control device of clause 31, wherein the digest-validation module is further operable to:
   return a negative-acknowledgement (NACK) message, responsive to determining that the second digest does not exist in the block chain.
33. The access-control device of clause 31 or 32, wherein the digest-validation module is further operable to:
   return an acknowledgement (ACK) message, responsive to determining that the second digest exists in the block chain.
34. The access-control device of clause 31 or 32, wherein the digest-validation module is further operable to, responsive to determining that the second digest exists in a block of the block chain:
   validate the block; and
   return an acknowledgement (ACK) message responsive to determining that the block is valid.
35. The access-control device of clause 34, wherein the digest-validation module is further operable to:
   return a negative-acknowledgement (NACK) message responsive to determining that the block is not valid.
36. The access-control device of clause 34, wherein validating the block involves one or more of:
   determining whether a neighboring block in the block chain includes a hash value that matches the block's hash value; and
   determining whether the block and a corresponding block of a remote access-control device have matching hash values.

## Claims

1. A method comprising:
obtaining, by a computing device, a data object being published by a user;
generating a partial message that includes a subset of the data object; and
sending the partial message to an intended recipient of the data object, without first receiving a request for the data object from the intended recipient.

2. The method of claim 1, further comprising:
generating an access key that includes at least one section of the data object that is not in the partial message; and
sending the access key to an access-control device that controls access to the data object, or to a storage server.

3. The method of claim 1 or 2, wherein generating the partial message involves:
identifying, from the data object, one or more data blocks that are to be made corrupt;
extracting a segment of a respective data block to make the respective data block corrupt; and
combining the corrupt data blocks to form the partial message.

4. The method of any preceding claim, further comprising:
generating a cover message for the data object; and
sending the cover message to the intended recipient, which facilitates the intended recipient to obtain the data object based on the cover message.

5. The method of claim 4, further comprising:
generating a digest from the cover message; and
sending the digest to an access-control device that controls access to the data object.

6. The method of claim 4 or 5, wherein the cover message includes one or more of:
an email message;
a short message service (SMS) message;
an instant messaging (IM) message;
a message posted on a social media service; and
an audio recording.

7. The method of any preceding claim, further comprising encrypting the data object using a predetermined encryption key to produce an encrypted message;
wherein generating the partial message involves:
obtaining at least one section from the encrypted message; and
generating the partial message to include the at least one section of the encrypted message.

8. The method of any preceding claim, further comprising:
receiving, by an access-control device, an access key for the data object, which is being shared with at least one intended recipient, and a digest associated with the data object;
storing the access key and the digest in a look-up repository;
in response to receiving a request for the data object from a remote device, obtaining a second digest from the request; and
responsive to validating the second digest, returning the access key to the remote device.

9. A method comprising:
receiving, by an access-control device, an access key for a data object being shared with at least one intended recipient, and a digest associated with the data object;
storing the access key and the digest in a look-up repository;
in response to receiving a request for the data object from a remote device, obtaining a second digest from the request; and
responsive to validating the second digest, returning the access key to the remote device.

10. The method of claim 8 or 9, wherein storing the digest further involves storing the digest in a block chain, wherein a respective block of the block chain includes at least one digest, and a hash value of a previous block of the block chain.

11. The method of any of claims 8 to 10, wherein the access-control device is a member of a distributed hash table, and wherein the method further comprises:
responsive to storing the digest in the block chain, synchronizing the block chain with at least one other member device of the distributed hash table.

12. The method of any of claims 8 to 11, wherein returning the access key to the remote device involves:
performing a lookup operation, using the digest as input, to obtain an access key that includes the remainder of the data object; and
returning the access key to the remote device.

13. The method of any of claims 8 to 12, wherein validating the second digest involves performing a lookup operation in the block chain to determine whether the second digest exists in the block chain.

14. A non-transitory computer-readable storage medium storing instructions that when executed by a computer cause the computer to perform a method of any preceding claim.

15. An access-control device, comprising:
a communication module operable to receive an access key for a data object being shared with at least one intended recipient, and a digest associated with the data object;
a storage device operable to store the access key and the digest in a look-up repository;
a digest-lookup module operable to obtain a second digest from a request received from a remote device for the data object;
a digest-validation module operable to validate the second digest; and
an authorization module operable to return the access key to the remote device in response to the second digest being valid.
